# FASCICULE DE BREVET EUROPEEN

(11) **EP 0 629 830 B1**
(45) Date de publication et mention de la délivrance du brevet: **29.01.1997**
(21) Numéro de dépôt: 94401027.1
(22) Date de dépôt: 09.05.1994
(51) Int. Cl.: F27D 13/00, C21C 5/56

(54) **Installation de production de métal liquide par fusion de ferraille**
Geschmolzen Metal Herstellungsanlage für Schrottschmelzen
Installation for the production of liquid metal by scrap melting

(30) Priorité: 13.05.1993 FR 9305786
(43) Date de publication de la demande: 21.12.1994
(73) Titulaire: KVAERNER CLECIM, 95864 Cergy Pontoise Cedex (FR)
(72) Inventeur: Forestier, Guy, F-42170 Saint-Just-Saint-Rambert (FR)
(74) Mandataire: Michelet, Alain

(56) Documents cités:
- EP-A- 0 225 939
- WO-A-92/10594
- FR-A- 2 137 009
- GB-A- 1 121 741
- US-A- 4 021 192
- US-A- 4 083 675
- US-A- 5 204 873

## Description

L'invention a pour objet une installation de production de métal liquide par fusion d'une charge de matière ferreuse telle que de la ferraille (EP-A-0 225 939).

On utilise depuis longtemps, et de plus en plus, des fours électriques à arc pour la production d'acier par fusion de ferraille ou autre matière première ferreuse, par exemple un minerai préréduit.

D'une façon générale, un four électrique à arc comprend une cuve de fusion ayant un fond en forme de cuvette recouverte de matière réfractaire et une paroi latérale refroidie fermée, à sa partie supérieure, par un couvercle amovible en forme de voûte, la cuve étant associée à une ou plusieurs électrodes reliées à une source de courant. Chaque électrode est fixée à l'extrémité d'un bras s'étendant en porte-à-faux au-dessus de la cuve et pénètre verticalement dans celle-ci en traversant le couvercle par un orifice ménagé à cet effet.

Généralement, le four est alimenté en courant alternatif au moyen de trois électrodes consommables. Depuis un certain temps, cependant, on utilise, même pour de fortes puissances, des fours à courant continu, ce qui apporte certains avantages. Le four comprend alors une ou plusieurs électrodes consommables reliées, généralement, au pôle négatif de la source de courant et une ou plusieurs électrodes fixes formant anode, placées dans la sole, et reliées au pôle positif de la source de courant, par un ou plusieurs conducteurs de retour.

Un tel four est, en outre, associé à un certain nombre d'appareillages annexes tels que les installations électriques, des moyens de chargement en ferraille et en matières d'addition, des moyens d'évacuation de l'acier fondu et du laitier, des circuits d'évacuation et d'épuration des fumées, etc...

Par ailleurs, pour réduire la consommation d'énergie, une telle installation comprend généralement des moyens de préchauffage de la ferraille avant son entrée dans le four.

Cet ensemble assez complexe d'appareils onéreux et encombrants est placé dans un bâtimet qui comprend, d'une façon générale, une zone de réception et de reprise de la ferraille, une zone de préchauffage et une zone d'élaboration.

La ferraille brute arrive dans la zone de réception dans un ou plusieurs récipients ou "paniers" de transport qui sont repris et transportés d'une zone à l'autre par un ou plusieurs ponts roulants circulant au-dessus de toute l'installation.

Chaque panier est généralement muni d'un fond ouvrant permettant de déverser la ferraille dans la cuve du four dont le couvercle a été écarté. A cet effet, la voûte constituant le couvercle ainsi que les électrodes peuvent être suspendues à un portique déplaçable horizontalement ou, de préférence, à des bras montés rotatifs autour d'un axe vertical sur un socle placé à côté du four.

L'élaboration de l'acier génère, pendant les phases de fusion et d'affinage, un important volume de gaz chauds et poussiéreux qui doivent être épurés avant d'être rejetés à l'extérieur. La voûte fermant le four est donc munie d'un ou plusieurs orifices branchés sur un circuit d'épuration comportant, notamment, des moyens de dépoussiérage.

Il est habituel de récupérer la chaleur contenue dans ces fumées en les utilisant pour réaliser le préchauffage de la ferraille. Chaque nouvelle charge de ferraille est donc placée, en attente de chargement, dans une enceinte ou cellule de préchauffage disposée à côté du four et reliée au circuit d'évacuation des fumées du four qui cèdent ainsi leur chaleur à la ferraille placée dans l'enceinte.

Souvent, on fait passer les fumées, avant leur entrée dans l'enceinte de préchauffage, dans une chambre de combustion permettant de brûler l'oxyde de carbone et les autres imbrûlés, et de récupérer une partie des poussières entraînées par les fumées.

Le circuit d'évacuation des fumées du four est donc assez complexe et encombrant et peut être la source de pollutions accidentelles.

Chaque panier contenant une charge de ferraille froide et se trouvant dans la zone de réception est repris par le pont roulant pour être transporté dans une cellule de préchauffage où il reste le temps nécessaire. Après le préchauffage, le panier est transporté par le pont roulant au-dessus de la cuve du four dans laquelle la ferraille préchauffée est déversée par ouverture du fond.

Bien entendu, lors du chargement, la voûte du four doit être ouverte et il se produit une forte émission de fumées. Des projections d'acier et de laitier peuvent aussi se produire au moment du déversement de la ferraille dans la cuve.

Pour simplifier les manutentions et réduire les pollutions et, en même temps, améliorer le rendement thermique et énergétique, on a proposé, depuis quelque temps, d'utiliser une enceinte de préchauffage munie d'un fond ouvrant et d'un couvercle amovible et pouvant se déplacer entre une position de préchauffage à côté du four et une position de déversement de la ferraille dans le four. Dans la position de préchauffage, le couvercle est ouvert et une charge de ferraille est introduite dans l'enceinte. Celle-ci est alors refermée et branchée sur le circuit d'évacuation des fumées du four. Ces gaz chauds traversent l'enceinte, cèdent une partie de leur chaleur à la ferraille et sont évacués par une conduite vers le circuit d'épuration.

Après le préchauffage, l'enceinte de préchauffage est amenée au-dessus du four pour y déverser la ferraille préchauffée par ouverture du fond.

La demande EP 0514.526 de la même Société décrit, par exemple, une installation de ce type perfectionnée de façon à simplifier les circuits de gaz et réduire les risques de pollution.

Cependant, on s'est avisé que le préchauffage de la ferraille, s'il permet de réaliser une économie d'énergie, peut aussi présenter des inconvénients. En effet, compte tenu de l'origine des matières ferreuses, et surtout des ferrailles utilisées pour la production d'acier, il peut se produire, dans la phase d'échauffement, des composés nuisibles difficiles à éliminer. C'est le cas, en particulier, des ferrailles de collecte qui sont souvent polluées par des produits organiques tels que plastiques, huiles, peintures ... qui génèrent des composés organo-volatils et, en particulier, organo-chlorés, dont certains, en se décomposant, peuvent produire des produits toxiques tels que dioxines et furanes.

Pour éviter de telles pollutions, il faut, soit effectuer un tri des ferrailles, soit les soumettre à un prétraitement. De telles opérations augmentent, évidemment, le prix de la ferraille.

L'invention a pour objet de remédier à ces inconvénients grâce à un nouveau procédé de préchauffage de la ferraille permettant de limiter les risques de formation de composés toxiques et de faciliter leur épuration et leur destruction et ainsi d'utiliser directement la ferraille, telle qu'on la trouve sur le marché.

En outre, l'invention permet de simplifier et de rationaliser les circuits d'évacuation et de traitement des gaz et fumées.

L'invention concerne donc, d'une façon générale, une installation de production de métal liquide par fusion d'une charge de matière ferreuse comprenant au moins un four électrique de fusion constitué d'une cuve fermée par un couvercle amovible et associée à des moyens électriques de fusion d'une charge de matière ferreuse, au moins une enceinte de préchauffage de la charge et un circuit principal d'évacuation des gaz et fumées, muni de moyens d'élimination des polluants.

Conformément à l'invention, l'enceinte de préchauffage est associée à des moyens autonomes d'apport de chaleur et les gaz produits à l'intérieur de ladite enceinte sont évacués vers un circuit auxiliaire de traitement à débit réduit, muni de moyens spécifiques d'élimination des polluants, et les fumées produites à l'intérieur du four par la fusion de la charge sont évacuées directement vers le circuit principal de traitement.

Selon une autre caractéristique particulièrement avantageuse, le circuit auxiliaire de traitement à débit réduit comprend une chambre d'incinération des gaz de préchauffage munie d'un brûleur.

De façon particulièrement avantageuse, l'apport de chaleur est réalisé au moyen d'un brûleur alimenté avec un rapport sous-stoechiométrique du combustible au comburant.

On voit donc que, de façon surprenante, on n'utilise pas, pour le préchauffage de la ferraille, la chaleur des fumées sortant du four. Au contraire, selon une caractéristique essentielle de l'invention, on fait passer les gaz et fumées issus, respectivement, de l'enceinte de préchauffage et du four de fusion dans des circuits séparés munis de moyens distincts d'élimination de polluants prévus pour traiter des débits différents.

Il en résulte de nombreux avantages qui seront décrits en détail plus loin.

L'enceinte de préchauffage peut être fixe, la ferraille y étant introduite, par une ouverture munie d'une porte étanche, dans des paniers qui sont ensuite placés au-dessus du four pour le déversement de la ferraille préchauffée.

Mais, selon une disposition déjà connue, l'enceinte de préchauffage peut constituer elle-même un organe de chargement en se déplaçant entre une position écartée du four pour le préchauffage d'une charge de ferraille et une position au-dessus du four pour le déversement de la ferraille préchauffée. Dans ce cas, l'enceinte est munie d'un fond ouvrant qui, dans la position de préchauffage, doit être fermé de façon suffisamment étanche pour éviter les entrées d'air.

Selon une autre caractéristique particulièrement avantageuse de l'invention, une telle enceinte peut être constituée d'un four électrique aménagé de façon à servir alternativement au préchauffage de la ferraille et à sa fusion, un tel four étant muni de moyens d'apport de chaleur pour le préchauffage. L'orifice d'évacuation des gaz ménagé dans le couvercle peut alors être relié alternativement à deux circuits séparés, respectivement un circuit de traitement des gaz de préchauffage et un circuit principal d'épuration des fumées de fusion.

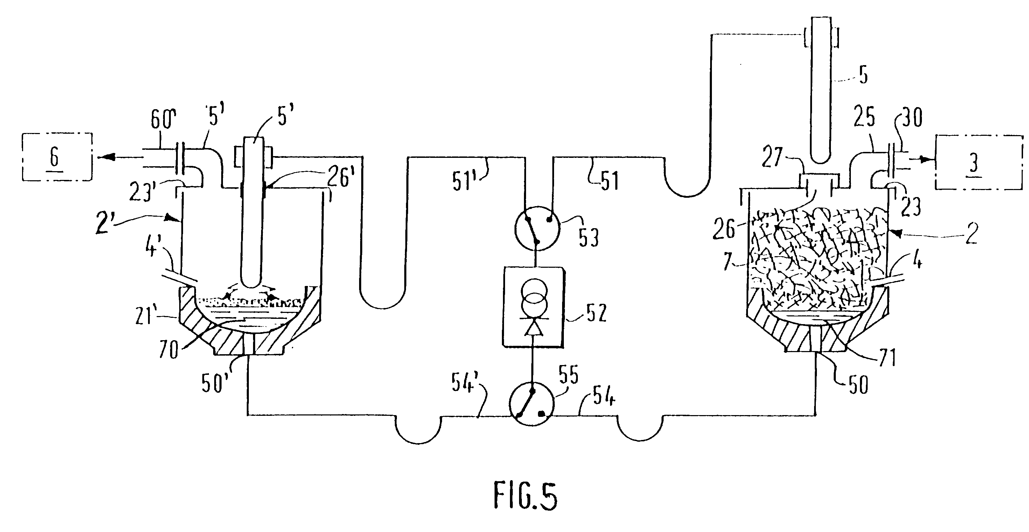

Un tel four, aménagé de façon à servir successivement au préchauffage puis à la fusion d'une même charge de ferraille, sera, de préférence, associé à un second four identique dans une installation de production de métal selon les dispositions représentées sur les Figures 5 à 8.

Dans ce cas, l'un des fours fonctionne en préchauffeur pendant que l'autre réalise la fusion et les deux fours peuvent être reliées alternativement et de façon amovible, sur l'un ou l'autre des circuits d'évacuation et d'épuration.

Pour réaliser la fusion, chaque four peut être associé à au moins une électrode consommable déplaçable verticalement et les électrodes peuvent être reliées à une même source de courant électrique par l'intermédiaire d'au moins un inverseur permettant de brancher alternativement sur la source de courant l'électrode associée au four servant à la fusion en débranchant l'électrode associée au four servant au préchauffage, et inversement.

Mais il est possible, également, d'utiliser un seul moyen de fusion commun pour les deux fours et comprenant au moins une électrode consommable montée coulissante verticalement sur un support déplaçable entre deux positions, respectivement, de l'une ou l'autre des fours pour l'introduction de l'électrode consommable dans celle des deux fours servant à la fusion.

Dans un premier mode de réalisation des circuits d'évacuation des fumées, l'orifice ménagé dans le couvercle de chaque four peut être relié, par une tubulure, à une bifurcation comprenant deux branches munies d'organes de fermeture amovibles, respectivement une première branche d'évacuation vers le circuit de traitement des gaz de préchauffage et une seconde branche d'évacuation vers le circuit d'épuration des fumées de fusion.

Dans un autre mode de réalisation, chaque four est relié au circuit principal d'épuration des fumées de fusion par une conduite d'évacuation munie d'un ventilateur, et est associé à un circuit auxiliaire de traitement des gaz de préchauffage branché en dérivation sur ladite conduite d'évacuation en amont du ventilateur, l'orifice d'évacuation, ménagé dans le couvercle de chaque four étant relié par une tubulure à une bifurcation munie d'organes de fermeture amovibles permettant de diriger les gaz, soit vers le circuit dérivé de traitement des gaz de préchauffage, le ventilateur correspondant étant réglé à débit réduit, soit, directement, vers le circuit principal d'épuration, le ventilateur correspondant étant réglé à son débit nominal.

Mais l'invention sera mieux comprise par la description détaillée de certains modes de réalisation particuliers donnés à titre d'exemple et représentés sur les dessins annexés.
- La Figure 1 est une vue générale schématique d'une installation de production de métal selon l'invention.
- La Figure 2 est une vue schématique en coupe d'une enceinte de préchauffage.
- La Figure 3 est une vue en coupe d'un autre mode de réalisation de l'enceinte de préchauffage.
- La Figure 4 est une vue en coupe d'un four électrique perfectionné de façon à servir alternativement pour le préchauffage et pour la fusion d'une charge de ferraille.
- La Figure 5 est un schéma d'une installation comprenant deux fours servant alternativement au préchauffage et à la fusion.
- La Figure 6 est un schéma des circuits d'épuration des gaz et fumées.
- La Figure 7 est un schéma d'une variante de l'installation montrant un autre mode de branchement électrique.
- La Figure 8 montre schématiquement un autre mode de réalisation des circuits d'épuration.

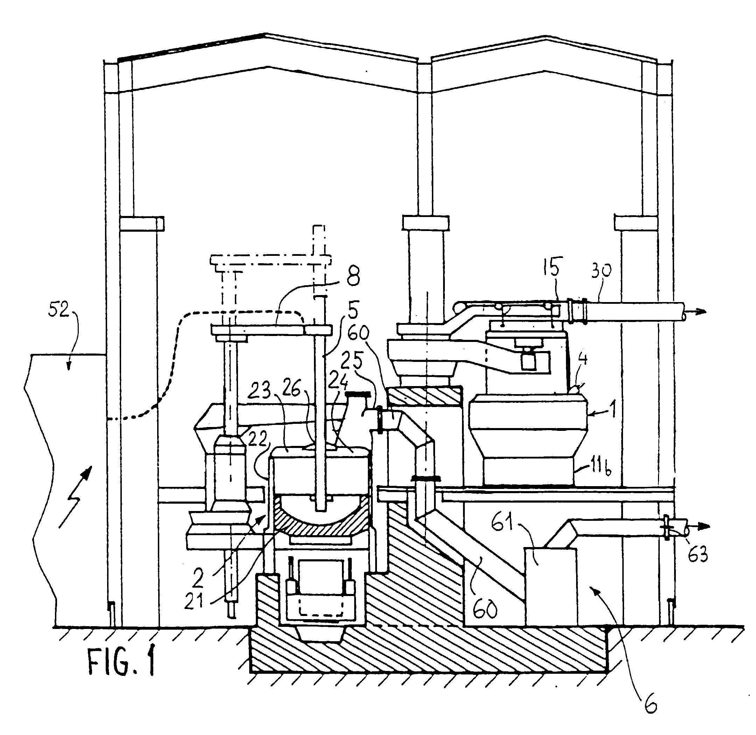

Sur la Figure 1, on a représenté, schématiquement, l'ensemble d'une installation de production de métal du type décrit dans le brevet EP 0514.526 déjà cité et comportant une enceinte de préchauffage 1 et un four électrique de fusion 2.

Le four de fusion, qui est avantageusement du type basculant, comprend une cuve 2 fermée par un couvercle amovible 23. La cuve 2 est constituée d'un fond 21 en forme de cuvette recouverte de matière réfractaire et prolongé vers le haut par une paroi latérale refroidie 22. L'ensemble est monté dans un bâti reposant sur un socle fixe par des parties d'appui arrondies. Par ailleurs, le four est muni des dispositions habituelles pour la coulée du métal fondu et du laitier.

Le four 2 est du type électrique et peut être alimenté en courant alternatif ou continu. Cependant, comme on le verra plus loin, il est particulièrement avantageux d'utiliser un four alimenté en courant continu et comportant, par conséquent, une ou plusieurs électrodes consommables 5 formant cathode, qui peuvent être introduites dans le four en passant chacune par un orifice du couvercle 23, et une ou plusieurs électrodes fixes 50, formant anode, placées dans la sole 21, lesdites électrodes étant reliées aux deux bornes, respectivement négative et positive, d'une source de courant continu.

Dans l'exemple représenté sur la Figure 1, le four est associé à une électrode consommable unique 5 portée par un organe de support extérieur tel qu'un bras pivotant 8, et qui peut être introduite verticalement dans le four en passant par un orifice 26 du couvercle 23.

D'autre part, le couvercle 23 est muni d'au moins un orifice 24 débouchant dans une tubulure 25 qui peut être branchée par une conduite 60 sur un circuit 6 d'évacuation et d'épuration des fumées.

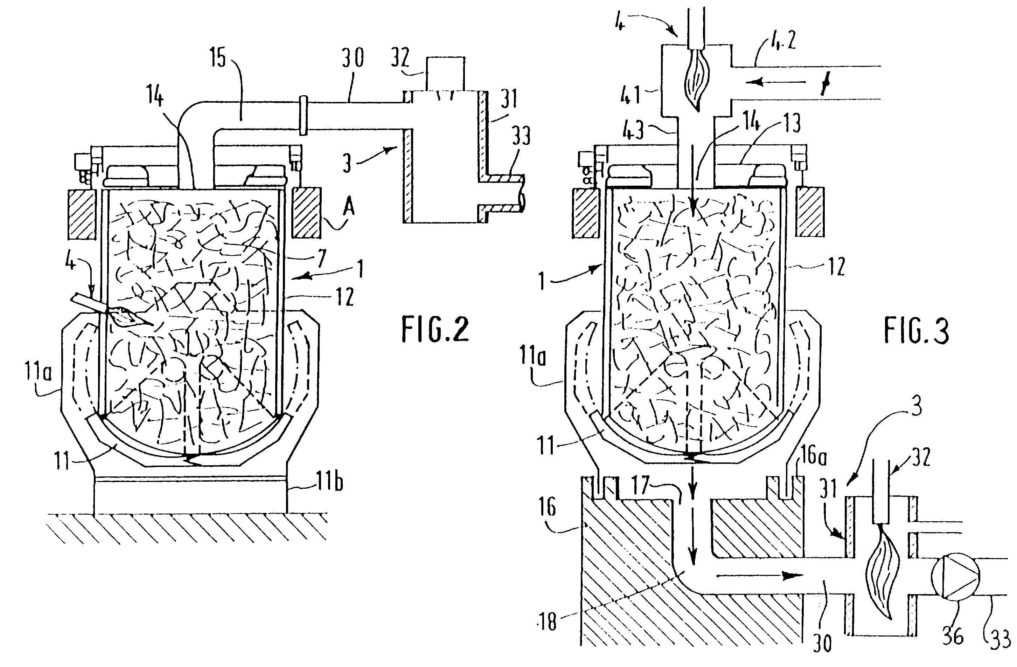

L'enceinte de préchauffage 1 représentée en détail sur la Figure 2, comprend, d'une façon générale, une paroi latérale 12 sensiblement cylindrique, centrée sur un axe vertical 10,et fermée, à sa partie supérieure, par un couvercle amovible 13 et, à sa partie inférieure, par un fond ouvrant 11 qui, dans le mode de réalisation représenté, est constitué de deux coquilles pouvant s'ouvrir par pivotement autour d'un axe horizontal.

Le couvercle 13 est muni d'un orifice 14 prolongé par une tubulure 15 qui peut être branchée de façon amovible sur une conduite 30 d'évacuation des gaz circulant dans l'enceinte 1.

De la sorte, selon une disposition particulière qui fait l'objet du brevet EP 0514.526, l'enceinte de préchauffage 1 peut avantageusement se déplacer entre une première position, à côté du four, pour le préchauffage de la ferraille, et une seconde position, au-dessus du four, pour le déversement de la ferraille préchauffée.

Cependant, dans la disposition antérieure, le circuit d'évacuation des fumées produites dans le four électrique était branché, par une conduite de dérivation, à la base de l'enceinte de préchauffage de façon à récupérer, dans celle-ci, le pouvoir calorifique des fumées, et, après avoir traversé l'enceinte 1, celles-ci étaient renvoyées dans le circuit d'évacuation des fumées, en aval de la dérivation.

Comme on l'a indiqué ci-dessus, l'invention va à l'encontre de cette disposition.

En effet, selon une caractéristique de l'invention, l'enceinte de préchauffage 1 est munie de moyens autonomes d'apport de chaleur tels qu'un ou plusieurs brûleurs 4 et les gaz et fumées produits à l'intérieur de l'enceinte de préchauffage 1 par le brûleur et par l'échauffement de la ferraille sont dirigés par une conduite 30 branchée sur la tubulure 15, vers un circuit spécifique de traitement 3.

Il en résulte que le débit de gaz sortant du préchauffeur 1 est considérablement diminué puisqu'il provient uniquement du dégagement de gaz résultant de l'échauffement de la ferraille auquel s'ajoutent seulement les fumées émises par la flamme du brûleur 4.

Comme on l'a indiqué, l'épuration des fumées et, en particulier, l'élimination des composés toxiques, est donc facilitée par la diminution considérable du débit à traiter.

Dans les solutions classiques, au contraire, on est obligé de traiter l'ensemble des fumées provenant du four et dans lesquelles se diluent les composés toxiques provenant du préchauffage.

De ce fait, l'invention permet d'utiliser des moyens spécifiques de traitement des gaz de préchauffage spécialement adaptés à la nature des composés contenus dans ces gaz et prévus pour traiter seulement un débit réduit.

Bien entendu, les fumées sortant du four, au cours de la phase de fusion, doivent être aspirées et dirigées vers des moyens d'épuration classiques, ces derniers étant prévus pour traiter un débit important, mais sans risque de pollution par des composés toxiques.

Par ailleurs, l'utilisation d'un ou plusieurs brûleurs pour le préchauffage de la ferraille permet encore de diminuer le risque d'émission de composés toxiques.

En effet, selon une autre caractéristique particulièrement avantageuse de l'invention, l'enceinte de préchauffage 1 est fermée, après chargement de la quantité voulue de ferraille 7 de façon à éviter les entrées d'air.

En outre, les débits relatifs de combustible et de comburant dans le ou les brûleurs 4 sont réglés avec un rapport sous-stoechiométrique, c'est-à-dire avec défaut d'air ou d'oxygène de façon à maintenir une atmosphère réductrice à l'intérieur de l'enceinte 1. De la sorte, il est possible de contrarier la formation des composés nuisibles tels que les dioxines et furanes et l'épuration des fumées aspirées par le circuit 3 peut donc être simplifiée, les risques de pollution étant réduits.

Comme les gaz émis par le préchauffage sont, généralement, partiellement combustibles, la conduite d'aspiration 30 débouche, de préférence, dans une chambre d'incinération 31 où les gaz sont brûlés avec un apport complémentaire d'énergie fournie, par exemple, par un brûleur de post-combustion 32, comme on l'a représenté sur la Figure 2. La chaleur ainsi fournie peut être récupérée pour tout usage.

A la sortie de la chambre d'incinération 31, une conduite 33 dirige les fumées vers un équipement d'épuration avec traitement des composés non totalement brûlés, par exemple avec filtration et traitement par charbon actif. Un tel équipement, non représenté sur la Figure, peut être réalisé d'une façon connue et dépend de la nature des produits polluants contenus dans la ferraille.

On peut aussi réaliser un refroidissement brutal des fumées, par exemple par pulvérisation d'eau, de façon à diminuer les risques de recomposition des produits toxiques dans une gamme de températures favorable à leur formation, par exemple 300 à 600°C.

Comme on l'a indiqué, il est nécessaire que l'enceinte 1 soit fermée d'une façon sensiblement étanche permettant d'éviter, autant que possible, les entrées d'air.

Le couvercle 13 doit donc être appliqué de façon étanche sur le bord supérieur de la paroi 12 et peut, par exemple, être suspendu, par des moyens de soulèvement, à un support B permettant de l'écarter de l'enceinte 1 pour l'ouverture de celle-ci.

Les coquilles constituant le fond ouvrant peuvent également être réalisées de façon à assurer une étanchéité suffisante. Cependant, il est avantageux d'utiliser une disposition décrite dans le brevet déjà cité EP 514.526, dans laquelle la partie inférieure de l'enceinte 1 est entourée d'une jupe 11a qui, par déplacement vertical de l'enceinte 1, peut venir s'appliquer de façon étanche, en position de préchauffage, sur un socle fixe 11b de profil adéquat, l'enceinte 1 étant soulevée, après le préchauffage, pour permettre son déplacement.

Il faut noter que l'utilisation, selon l'invention, d'un brûleur ou autre moyen de chauffage autonome associé à l'enceinte de préchauffage, facilite les déplacements de l'enceinte de préchauffage entre sa position de préchauffage et la position de déversement dans le four puisqu'il suffit de débrancher le circuit de traitement 3 auquel est reliée, de façon amovible, la tubulure 15.

Mais on peut aussi utiliser un circuit d'évacuation fixe selon la disposition représentée sur la Figure 3.

Dans ce cas, l'enceinte de préchauffage 1 est identique à celle qui vient d'être décrite, mais la jupe lla qui entoure le fond ouvrant 11 vient s'appliquer, en position abaissée, contre un socle de fermeture 16 dont la partie supérieure 16a présente un profil adapté à la partie inférieure de la jupe 11a pour assurer l'étanchéité.

Au centre du socle 16, est ménagé un orifice 17 prolongé par une tubulure 18 qui est reliée par une conduite 30 à la chambre d'incinération 31.

Comme précédemment, celle-ci est munie d'un brûleur de post-combustion 32 qui permet d'assurer la combustion complète des gaz issus du préchauffeur, les fumées brûlées étant évacuées par la conduite 33 vers le circuit d'épuration.

Dans ce cas, le brûleur 4 est avantageusement placé à la partie supérieure de l'enceinte 1 et peut être associé à une chambre de combustion 41 munie d'une entrée d'air 42 et d'une sortie 43 branchée sur l'orifice 14 ménagé dans le couvercle 13.

Le débit d'air admis par l'entrée 42 est réglé en tenant compte du débit d'air primaire dans le brûleur 4 de façon à maintenir un rapport sous-stoechiométrique dans les gaz de combustion admis dans l'enceinte 1.

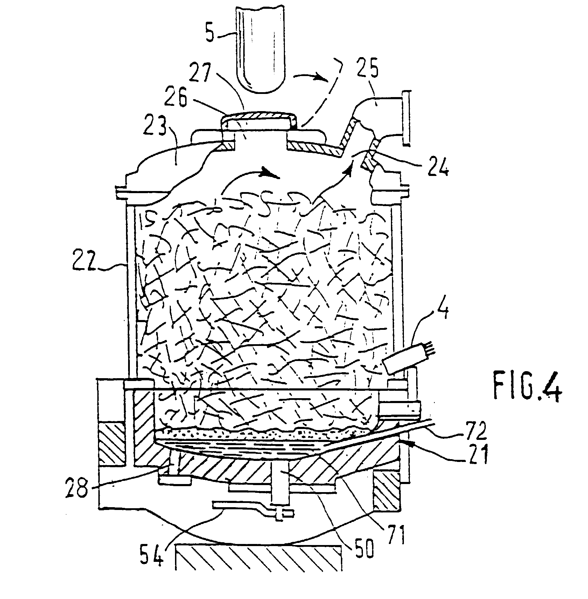

Pour réduire encore les risques de pollution, il est possible, dans un mode de réalisation particulièrement avantageux représenté sur la Figure 4, d'éviter les manipulations de ferraille en aménageant le four électrique de façon à y réaliser directement le préchauffage de la charge.

Un tel four reste du type classique et comprend donc une cuve 2 fermée par un couvercle amovible 23 dans lequel est ménagé au moins un orifice 26 de pénétration d'au moins une électrode 5.

Cependant, le couvercle 23 est muni, de préférence, d'un panneau d'obturation amovible 27 qui ferme de façon étanche le four 2 lorsque celui-ci sert au préchauffage, l'électrode 5 étant retirée.

D'autre part, la cuve 2 est munie d'au moins un brûleur 4 placé, de préférence, à la base de la paroi latérale 22, juste au-dessus du bord supérieur de la cuvette 21 en matière réfractaire. On peut d'ailleurs utiliser plusieurs brûleurs répartis sur la périphérie du four 2. Chaque brûleur 4 est alimenté en combustible et en comburant dont on peut régler les débits relatifs de façon à maintenir un rapport sous-stoechiométrique permettant d'assurer une atmosphère réductrice dans le four. Les fumées sont évacuées par un orifice 24 du couvercle débouchant dans une tubulure 25 qui peut être reliée, de façon amovible, au circuit auxiliaire de traitement 3 pendant la phase de préchauffage.

Lorsque la ferraille a été portée à la température souhaitée, on coupe le brûleur 4 et l'on ouvre l'orifice 26 pour introduire l'électrode consommable 5 qui est reliée au pôle négatif de la source de courant, l'électrode de sole 50 étant reliée au pôle positif.

Le circuit auxiliaire de traitement 3 des gaz de préchauffage est fermé et la tubulure 25 est alors branchée sur le circuit habituel 6 d'épuration et de dépoussiérage des fumées produites par la fusion.

L'électrode 5 est descendue progressivement au fur et à mesure de la fusion de la ferraille 7 et le métal fondu forme un bain liquide 71 qui se rassemble dans la cuvette 2.

A la fin de la fusion, le métal liquide est coulé de la façon habituelle. Cependant, il est intéressant de conserver, dans le fond de la cuvette, un pied de bain 71 au-dessus duquel est déversée, après ouverture du couvercle 23, une nouvelle charge de ferraille 7.

Un tel pied de bain 71 permet, en effet, d'effectuer une injection combinée d'oxygène et de carbone au moyen d'une ou plusieurs lances 72 débouchant à l'intérieur du pied de bain 71. Cette injection d'oxygène dans le métal fondu peut, en effet, assurer, en complément du brûleur 4 ou même seule, l'apport énergétique nécessaire au préchauffage des ferrailles et à la post-combustion des gaz émis, le débit de comburant étant réglé de façon à maintenir une atmosphère réductrice à l'intérieur du four 2.

Grâce à cette utilisation de la même enceinte pour le préchauffage et pour la fusion, on évite les opérations de transfert de la ferraille préchauffée et l'on diminue les risques de pollution, la voûte 23 de fermeture du four n'ayant plus à être ouverte. En outre, la productivité et le rendement énergétique sont améliorés.

Une telle disposition est particulièrement intéressante si l'on utilise deux fours identiques 1, 1', aménagés de cette façon pour servir chacun, alternativement, au préchauffage et à la fusion. Une telle disposition a été représentée, schématiquement, sur la Figure 5.

Dans ce cas, les deux opérations peuvent être réalisées simultanément, l'un des fours, par exemple le four de droite 2 étant placé en position de préchauffage et le four de gauche 2' en position de fusion.

Dans le cas représenté, les deux fours fonctionnent en courant continu, chaque four 2, 2', étant associé à une électrode consommable 5, 5', formant cathode, et à une électrode de sole 50, 50', formant anode, et placée dans la partie centrale du fond 21.

Le four de droite 2 est placé en position de préchauffage, l'électrode consommable 5, étant soulevée au-dessus du couvercle 13. L'orifice central 26 de passage de l'électrode est fermé de façon étanche par le couvercle 27. La tubulure 25 est branchée sur une conduite 30 qui dirige les gaz de préchauffage vers le circuit auxiliaire de traitement 3.

En revanche, le four de gauche 2' est en position de fusion, l'électrode consommable 5' ayant été introduite dans la cuve en passant par l'orifice 26'. La tubulure d'évacuation 25' est branchée sur une conduite 60' qui dirige les fumées du four vers le circuit principal d'épuration 6.

Les électrodes consommables 5, 5', et les électrodes fixes 50, 50', sont reliées, respectivement, aux deux bornes de la source de courant 52, par des conducteurs d'alimentation 51, 51', et des conducteurs de retour 54, 54'.

Les conducteurs sont munis d'interrupteurs permettant d'alimenter les électrodes de l'une des cuves et d'isoler l'autre. Il est avantageux d'utiliser, à cet effet, des inverseurs électriques 53, 55.

Dans le cas de la Figure 5, les inverseurs 53, 55, relient la source de courant 52 au four 2' où se réalise la fusion alors que le four de droite 2 est isolé électriquement et fonctionne en préchauffeur. La cuve 2 a donc été préalablement remplie d'une charge de ferraille 7 qui est préchauffée par le brûleur 4 alimenté, comme on l'a vu, en défaut d'oxygène, les fumées ainsi produites étant évacuées, avec les composés toxiques, vers le circuit auxiliaire de traitement 3 par une conduite 30 branchée sur la tubulure 25.

Pendant ce temps, on réalise dans le four de gauche 2' la fusion de la charge de ferraille préchauffée au cours de l'opération précédente. Il se forme ainsi dans la cuvette 21' un bain d'acier 70 qui peut être traité de la façon habituelle, le four 2' étant muni de tous les dispositifs nécessaires au fonctionnement d'un four à courant continu. Ces dispositions étant connues, elles n'ont pas été représentées sur la Figure.

Lorsque la fusion est achevée, le métal fondu est coulé, par exemple, par un bec ou un trou de coulée 28 muni d'une busette à tiroir, comme on l'a représenté sur la Figure 4.

On peut alors inverser les fonctions des deux fours 2 et 2'.

Le couvercle 27 de l'orifice central 26 du four de droite 2 est ouvert pour permettre la descente de l'électrode consommable 5 jusqu'au contact avec la ferraille préchauffée. Au moyen des inverseurs 53, 55, le four 2 est branché sur la source de courant 52 et, dès lors, va fonctionner, de façon classique, en four électrique, le four de gauche 2' étant, au contraire, isolé.

D'autre part, on retire l'électrode 5' du four de gauche 2' et on ouvre le couvercle 23' pour permettre l'introduction d'une nouvelle charge de ferraille.

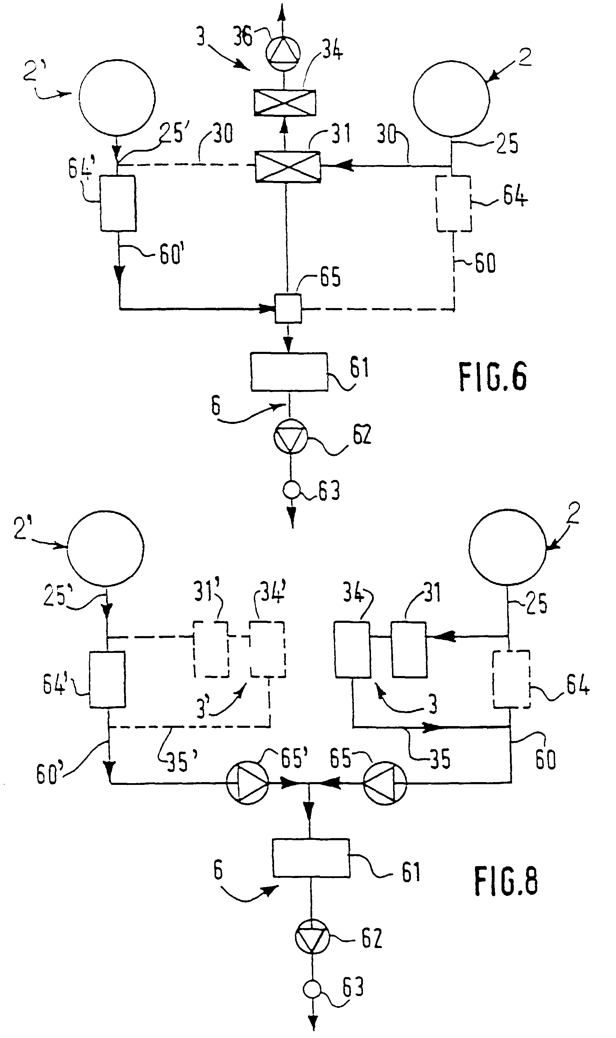

Après le chargement, le couvercle 23' est refermé ainsi que l'orifice central 26' et l'on branche la tubulure 15' sur le circuit auxiliaire 3 de traitement des gaz de préchauffage, par exemple de la façon décrite plus loin et représentée sur la Figure 6.

Le brûleur 4' du four 2' est alors mis en route, de préférence avec un réglage sous-stoechiométrique, pour y réaliser le préchauffage.

La disposition précédente a donc été inversée, le four de droite 2 servant maintenant à la fusion de la charge préalablement préchauffée et le four de gauche 2' au préchauffage de la nouvelle charge.

Les deux fours 2 et 2' doivent donc être associés à des moyens permettant de les brancher alternativement soit sur le circuit auxiliaire 3 de traitement des fumées de préchauffage, soit sur le circuit principal 6 d'épuration.

On peut, à cet effet, utiliser la disposition représentée sur la Figure 6 qui montre schématiquement les deux fours 2 et 2' ainsi que l'ensemble des circuits d'aspiration des gaz et des fumées.

Dans l'exemple représenté, le four 2 est en position de préchauffage et la tubulure d'évacuation 25 est donc reliée par une conduite 30 au circuit auxiliaire 3 de traitement des gaz de préchauffage qui comprend, par exemple, une chambre d'incinération 31 et des moyens divers 34 de traitement des fumées, celles-ci étant aspirées par un ventilateur 35 et refoulées vers la cheminée.

Le four 2' est en position de fusion et sa tubulure d'évacuation 25' est donc branchée sur une conduite 60' qui dirige les fumées produites par la fusion vers un circuit d'épuration principal 6 comprenant essentiellement un dispositif de filtration 61 et un ventilateur principal 62 qui aspire les fumées pour les refouler vers la cheminée 63.

De préférence, avant d'être dirigées vers le circuit d'épuration principal 6, les fumées du four 2' passent par une chambre de combustion 64' permettant leur incinération, de façon à diminuer les risques de pollution.

En outre, on peut ainsi récupérer au moins une partie du pouvoir calorifique des fumées.

Le dispositif de filtration 61 peut avantageusement être précédé d'un moyen de refroidissement brusque tel qu'une tour de pulvérisation 65 installée en aval de la chambre de combustion 64'.

Pour inverser les fonctions et faire passer le four 2 en position de fusion, on coupe la conduite 30 et l'on branche la tubulure 25 sur une conduite 60 reliée au circuit d'épuration principal 6 et indiquée en pointillé sur la Figure 6, en passant avantageusement par une chambre de combustion 64. De la même façon, pour placer le four 2' en position de préchauffage, on coupe la conduite 60' et l'on branche la tubulure 25' sur une conduite 30' de liaison avec le circuit auxiliaire 3 de traitement des gaz de préchauffage.

Il apparaît que l'utilisation de deux fours identiques aménagées de façon à pouvoir servir alternativement au préchauffage et à la fusion, permet de réaliser les opérations pratiquement en série. Il en résulte une utilisation quasi permanente de la puissance électrique installée, la source électrique n'étant débranchée, en pratique, que pour l'inversion des connexions.

Ainsi, outre la limitation des risques de pollution, une telle installation apparaît hautement productive puisqu'elle permet une utilisation optimale de la puissance électrique installée.

Comme on l'a déjà indiqué, les dispositions selon l'invention permettent de simplifier les circuits d'aspiration des gaz en réduisant, notamment, le nombre de circuits et les branchements et débranchements de conduites qui étaient nécessaires auparavant pour permettre les déplacement de l'enceinte de préchauffage et/ou des paniers de ferraille.

De même, en réalisant le préchauffage à l'intérieur du four lui-même, on évite d'ouvrir le four pour y introduire la charge préchauffée et les risques de pollution sont diminués.

Dans ce cas, la quantité de métal coulé correspond à une seule charge mais, dans la mesure où l'on utilise deux fours fonctionnant alternativement et presque sans discontinuité, la production globale peut être maintenue.

La productivité peut, d'ailleurs, être sensiblement améliorée dans le cas d'un fonctionnement en courant continu si l'on utilise un four perfectionné de la façon représentée sur la Figure 4.

On sait, en effet, que dans le cas d'un four fonctionnant en courant alternatif et utilisant, normalement, trois électrodes consommables, celles-ci ont une résistance nécessairement réduite.

C'est pourquoi, jusqu'à présent, il avait semblé nécessaire de limiter la hauteur de la ferraille chargée à l'intérieur du four pour que les électrodes ne soient pas soumises à des sollicitations excessives lorsqu'elles sont introduites dans la ferraille et produisent progressivement la fusion de celle-ci.

En revanche, dans le cas où le four est alimenté en courant continu, il est possible, même pour de fortes puissances, d'utiliser une électrode unique qui, de ce fait, peut avoir des dimensions plus importantes et en outre, n'est pas soumise aux effets électromagnétiques que subissent les trois électrodes d'un four à courant alternatif. De plus, cette électrode est placée, généralement, dans l'axe du four et est donc sollicitée par la ferraille d'une façon relativement symétrique.

De ce fait, une telle électrode unique peut présenter une plus grande résistance et, en outre, est moins sollicitée. On a donc observé qu'il serait possible, pour une même production de métal, d'augmenter la hauteur de la ferraille à l'intérieur du four et, ainsi, de charger en une seule fois la quantité de ferraille correspondant à une charge normale de métal fondu, celle-ci pouvant dépasser 100 tonnes.

On notera qu'une telle disposition est particulièrement intéressante dans le cas de l'invention où la ferraille peut être chargée froide dans un four servant, d'abord, de préchauffeur et, ensuite, n'est plus manutentionnée jusqu'à sa fusion.

C'est pourquoi, selon une autre caractéristique très avantageuse de l'invention, la paroi latérale 12 de la cuve du four présentera donc une hauteur suffisante pour que la cuve puisse contenir toute la ferraille nécessaire à la réalisation d'une charge normale. De la sorte, même dans le cas de fours de forte capacité il est possible d'introduire à froid dans la cuve toute la charge de ferraille nécessaire et de ne plus réouvrir le four jusqu'à la coulée, ce qui diminue les risques de pollution.

Mais l'invention n'est pas limitée aux seules dispositions qui viennent d'être décrites et pourrait faire l'objet d'autres variantes ou perfectionnements sans s'écarter du cadre de protection défini par les revendications.

Par exemple, dans tous les modes de réalisation qui viennent d'être décrits, le préchauffage est réalisé au moyen d'un brûleur alimenté avec un rapport sous-stoechiométrique, mais on a indiqué qu'un apport de chaleur pouvait aussi être obtenu par injection d'oxygène et/ou d'un produit carboné dans un pied de bain d'acier. Dans certains cas cependant, on pourrait utiliser d'autres moyens, par exemple électriques, permettant d'apporter la chaleur nécessaire tout en maintenant une atmosphère réductrice dans l'enceinte.

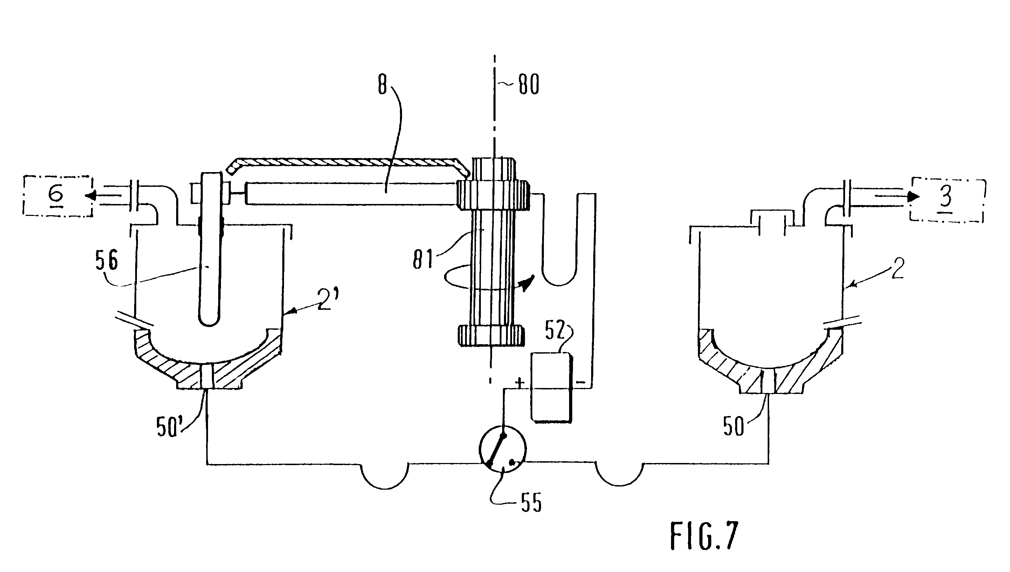

Par ailleurs, dans le cas d'une installation à deux fours, d'autres dispositions pourraient être adoptées, comme le montrent les Figures 7 et 8. Il est possible, en effet, d'associer les deux fours 2 et 2' à une seule électrode consommable 55 montée coulissante verticalement à l'extrémité d'un bras de support 8 qui peut tourner sur un socle 81 autour d'un axe vertical 80 placé à égale distance des deux cuves de telle sorte que, par rotation du bras 8, l'électrode consommable 56 puisse venir se placer alternativement au-dessus du four 2 ou au-dessus du four 2'.

De la sorte, le conducteur d'alimentation relié à l'électrode consommable 56 peut rester branché en permanence sur la borne négative de la source de courant 52, les électrodes de sole 50, 50', étant reliées alternativement à la borne négative par l'inverseur 55. Une telle disposition permet donc de simplifier l'installation et d'utiliser un seul support d'électrode.

Mais on peut aussi apporter des modifications aux circuits d'évacuation des fumées, par exemple de la façon représentée sur la Figure 8.

Dans ce cas, chaque four 2, 2', est relié au circuit principal d'épuration 6 par une conduite 60 sur laquelle est branché en dérivation un circuit auxiliaire 3, 3', de traitement des gaz de préchauffage comportant une chambre d'incinération 31 et un dispositif de traitement et de refroidissement 34.

La tubulure 25 (25') reste alors branchée sur la conduite 60 (60') en amont d'une bifurcation munie d'organes de fermeture qui permettent de diriger les gaz soit, directement, vers la chambre de combustion 64 (64') et le circuit 6, soit, par une conduite de dérivation 30 (30'), vers le circuit de traitement 3 (3'), les gaz étant ramenés, après traitement, vers le circuit 6, par une conduite de retour 35 (35').

Sur chaque conduite 60 (60') d'amenée des fumées vers le circuit d'épuration 6, est placé un ventilateur refoulant 65 (65') dont le débit peut être réglé.

Sur la Figure 8, les circuits et appareils en service ont été représentés en trait plein, les parties non parcourues par les gaz étant indiquées en pointillé.

On voit donc que les gaz sortant par la tubulure 25 du four 2 qui fonctionne en préchauffage sont dirigés vers le circuit auxiliaire de traitement 3, la chambre de combustion 64 étant court-circuitée. Le ventilateur correspondant 65 fonctionne alors à débit réduit.

En revanche, les fumées, sortant du four 2' dans lequel est réalisée la fusion, passent directement dans la chambre de combustion 64' et sont refoulées vers le circuit principal d'épuration 6 par le ventilateur 65' qui fonctionne à son débit nominal. Le circuit auxiliaire de traitement 3' est alors court-circuité.

Bien entendu, un tel système pourrait encore être modifié. Par exemple, on pourrait utiliser un seul circuit auxiliaire de traitement 3 branché par des conduites 30 (30') et 35 (35'), munies d'organes de fermeture amovibles, respectivement en amont et en aval des chambres de combustion 64 (64') associées aux deux fours 2 et 2'.

Les signes de référence, insérés après les caractéristiques techniques mentionnées dans les revendications, ont pour seul but de faciliter la compréhension de ces dernières et n'en limitent aucunement la portée.

## Revendications

1. Installation de production de métal liquide par fusion d'une charge de matière ferreuse comprenant au moins un four électrique de fusion (2) constitué d'une cuve (22) fermée par un couvercle amovible (23) et associée à des moyens électriques (5) de fusion d'une charge de matière ferreuse, au moins une enceinte (1) de préchauffage de la charge et un circuit principal (6) d'évacuation des gaz et fumées, muni de moyens (61) d'élimination des polluants,
l'enceinte de préchauffage (1) etant associée à des moyens autonomes (4) d'apport de chaleur, caractérisée par le fait que les gaz produits à l'intérieur de ladite enceinte (1) sont évacués vers un circuit auxiliaire (3) de traitement à débit réduit, muni de moyens spécifiques (31) d'élimination des polluants, et que les fumées produites à l'intérieur du four (2) par la fusion de la charge (7) sont évacuées directement vers le circuit principal de traitement (6).

2. Installation selon la revendication 1, caractérisée par le fait que le circuit auxiliaire (3) de traitement à débit réduit comprend une chambre (31) d'incinération des gaz de préchauffage munie d'un brûleur (32).

3. Installation selon la revendication 1, caractérisée par le fait que que les moyens autonomes (4) d'apport de chaleur dans l'enceinte (1) de préchauffage sont prévus pour réaliser un apport de chaleur avec maintien d'une atmosphère réductrice à l'intérieur de l'enceinte (1) et que cette dernière est fermée de façon suffisamment étanche pour éviter des entrées d'air susceptibles de modifier le rapport stoechiométrique.

4. Installation selon la revendication 3, caractérisée par le fait que les moyens autonomes (4) d'apport de chaleur dans l'enceinte de préchauffage (1) comprennent au moins un brûleur (4) alimenté avec un rapport sous-stoechiométrique du combustible au comburant.

5. Installation selon l'une des revendications précédentes, caractérisée par le fait que l'enceinte de préchauffage (1) est fixe et est munie d'au moins une porte de fermeture étanche pour l'introduction et le retrait d'au moins un panier de manutention de la ferraille.

6. Installation selon l'une des revendications 1 à 4, caractérisée par le fait que l'enceinte de préchauffage (1) est munie d'un fond ouvrant (11) associé à des moyens amovibles d'étanchéité (11a) (11b) et portée par un support (A) lui permettant de se déplacer entre une position écartée du four pour le préchauffage de la ferraille (7) et une position au-dessus du four pour le déversement dans celui-ci de la ferraille préchauffée.

7. Installation selon l'une des revendications précédentes, caractérisée par le fait que l'enceinte de préchauffage (1) est constituée d'un four électrique comprenant une cuve (2) fermée par un couvercle amovible (23), et associée, d'une part, à des moyens (4) d'apport de chaleur par combustion et, d'autre part, à des moyens électriques de fusion (5), de façon à pouvoir servir successivement au préchauffage puis à la fusion d'une charge de ferraille (7), le couvercle (23) étant muni d'au moins un orifice (24) débouchant dans une tubulure (25) d'évacuation des gaz qui peut être reliée de façon amovible, alternativement au circuit auxiliaire (3) de traitement des gaz de préchauffage ou au circuit principal (6) d'épuration des fumées de fusion.

8. Installation selon la revendication 7, caractérisée par le fait que les moyens de fusion comprennent au moins une électrode (5) reliée à une source de courant et associée à des moyens d'introduction et de retrait de ladite électrode (5) par un orifice (26) ménagé dans le couvercle (23) du four (2), ce dernier étant associé à des moyens amovibles (27) de fermeture étanche après retrait de l'électrode (5).

9. Installation selon la revendication 8, caractérisée par le fait que le four (2) est associé à au moins une électrode consommable (5) pouvant traverser le couvercle (23) et à au moins une électrode fixe (50) placée dans le fond (21), lesdites électrodes étant reliées, respectivement, aux deux pôles d'une source de courant continu.

10. Installation selon l'une des revendications 7 à 9, caractérisée par le fait qu'elle comprend deux fours identiques (1) (1') pouvant servir alternativement au préchauffage d'une charge de ferraille (7) et à sa fusion et que les deux fours (1) (1') peuvent être reliées alternativement et de façon amovible sur l'un ou l'autre desdits circuits d'évacuation (3) (6), l'enceinte (1) servant au préchauffage étant reliée au circuit auxiliaire de traitement (3) et l'enceinte (1') servant à la fusion étant reliée au circuit principal d'épuration (6) et inversement.

11. Installation selon la revendication 10, caractérisée par le fait que les moyens de fusion comportent, pour chaque enceinte (1) (1'), au moins une électrode consommable (5) (5') déplaçable verticalement de façon à pénétrer dans l'enceinte (1) (1') et que les électrodes (5) (5') associées respectivement aux deux fours (1) (1') peuvent être reliées à une même source de courant électrique (52) par l'intermédiaire d'au moins un inverseur (53) permettant de brancher alternativement sur la source de courant (52) l'électrode (5') associée à l'enceinte (1') servant à la fusion en débranchant l'électrode (5) associée à l'enceinte (1) servant au préchauffage, et inversement.

12. Installation selon la revendication 10, caractérisée par le fait qu'elle comprend un moyen de fusion commun pour les deux fours (1) (1') comprenant au moins une électrode consommable (56) montée coulissante verticalement sur un support (8) déplaçable entre deux positions, respectivement, d'introduction de l'électrode consommable (56) dans celui des deux fours (1) (1') servant à la fusion.

13. Installation selon l'une des revendications 10 à 12, caractérisée par le fait que, chaque four (2) (2') étant fermé par un couvercle (23) (23') muni d'au moins un orifice (26) (26') d'introduction dans l'enceinte d'au moins une électrode consommable (5) (5') déplaçable verticalement, chaque orifice (26) (26') est muni d'un moyen (27) (27') de fermeture étanche après retrait de l'électrode (5) (5'), et que chaque enceinte (1) (1') est associée à des moyens (4) (4') susceptibles d'apporter la quantité de chaleur nécessaire au préchauffage tout en maintenant une atmosphère réductrice dans le four (2) (2'), le couvercle (23) (23'), l'orifice (26) (26') de passage de l'électrode (5) (5') et tous autres orifices d'entrée d'air étant fermés de façon sensiblement étanche pendant le préchauffage.

14. Installation selon l'une des revendications précédentes, caractérisée par le fait que le circuit auxiliaire de traitement (3) comprend une chambre (31) d'incinération des gaz de préchauffage, munie d'un brûleur (32).

15. Installation selon l'une des revendications 7 à 14, caractérisée par le fait que la paroi latérale (22) du four (2) a une hauteur suffisante pour que, compte tenu des dimensions de la cuvette (21) et des différences de densité entre la ferraille et le métal fondu, la charge de ferraille (7) à préchauffer introduite dans le four (2) fournisse, après fusion, une quantité de métal fondu suffisante pour une coulée.

16. Installation selon l'une des revendications 7 à 15, caractérisée par le fait que les moyens autonomes d'apport de chaleur pour le préchauffage comprennent au moins une lance (72) d'injection d'un comburant et/ou d'un produit carboné dans un pied de bain (71) laissé dans le fond de la cuvette (21) à la coulée du métal et au-dessus duquel est placée la nouvelle charge (7) de ferraille à préchauffer.

17. Installation selon l'une des revendications 10 à 16, caractérisée par le fait que l'orifice (24) (24') ménagé dans le couvercle (23) (23') de chaque four (2) (2') peut être relié par une tubulure (25) (25') à une bifurcation comprenant deux branches (30, 60) (30', 60') munies d'organes de fermeture amovibles, respectivement une branche (30) (30') d'évacuation vers le circuit auxiliaire (3) de traitement des gaz de préchauffage et une branche (60) (60') d'évacuation vers le circuit principal (6) d'épuration des fumées de fusion.

18. Installation selon l'une des revendications 10 à 16, caractérisée par le fait que chaque four (2) (2') est relié au circuit principal d'épuration (6) des fumées de fusion par une conduite d'évacuation (60) (60') munie d'un ventilateur (65) (65'), et est associé à un circuit auxiliaire (3) (3') de traitement des gaz de préchauffage branché en dérivation sur ladite conduite d'évacuation (60) (60'), en amont du ventilateur (65) (65'), l'orifice d'évacuation (24) (24'), ménagé dans le couvercle (23) (23') de chaque four (2'), étant relié par une tubulure (25) (25') à une bifurcation munie d'organes de fermeture amovibles permettant de diriger les gaz, soit vers le circuit dérivé (3) de traitement des gaz de préchauffage, le ventilateur correspondant (65) étant réglé à débit réduit, soit, directement, vers le circuit principal d'épuration (6), le ventilateur correspondant (65') étant réglé à son débit nominal.

## Patentansprüche

1. Anlage zur Herstellung von Flüssigmetall durch Schmelzen einer Ladung eisenhaltiges Material, bestehend aus mindestens einem Elektro-Schmelzofen (2), der ein durch einen abnehmbaren Deckel (23) verschlossenes Gefäss (22) umfasst, dem elektrischen Mittel (5) zum Schmelzen einer Ladung eisenhaltigem Materials zugeordnet sind, aus mindestens einem Behälter (1) zum Vorwärmen der Ladung und einem Hauptkreis (6) für den Gas- und Rauchabzug mit Mitteln (61) zur Entsorgung der Schadstoffe, wobei dem Vorwärmebehälter (1) unabhangige Wärmezufuhrmittel (4) zugeordnet sind, dadurch gekennzeichnet, dass die innen in diesem Behälter (1) erzeugten Gase einem spezifische Mittel (31) zur Entsorgung der Schadstoffe aufweisenden Hilfekreis (3) zur Aufbereitung mit einem reduzierten Durchsatz zugeführt werden, und dass der durch das Abschmelzen der Ladung (7) inner im Ofen (2) erzeugte Rauch direkt einem Hauptkreis (6) zur Behandlung zugeführt werden.

2. Anlage nach Anspruch 1, dadurch gekennzeichnet, dass der Hilfskreis (3) zur Aufbereitung mit reduziertem Durchsatz eine Kammer (31) zur Verbrennung der Vorwärmgase mit einem Brenner (32) aufweist.

3. Anlage nach Anspruch 1, dadurch gekennzeichnet, dass die unabhängigen Wärmezufuhrmittel (4) in den Vorwärmbehälter (1) zur Gewährleistung einer Wärmezufuhr bei Aufrechterhaltung einer reduzierenden Atmosphäre innen in dem Behälter (1) vorgesehen sind, und dass letzterer mit einer Lufteintritte verhindernden ausreichender Dichtheit verschlossen ist, welche das stöchiometrische Verhältnis ändern können.

4. Anlage nach Anspruch 3, dadurch gekennzeichnet, dass die unabhängigen Wärmezufuhrmittel (4) in den Vorwärmbehälter (1) mindestens ein Brenner (4) umfassen, dessen Versorgung in einem unterstöchiometrischen Verhältnis des Brennstoffes zum Sauerstoffträger erfolgt.

5. Anlage nach einem der vorangehenden Anspruche, dadurch gekennzeichnet, dass der Vorwärmbehälter (1) feststehend ist und mindestens eine dicht abschliessende Tür zum Ein- und Ausfahren mindestens eines Schrotttransportkorbes aufweist.

6. Anlage nach einem der Ansprüche 1 bis 4, dadurch gekennzeichnet, dass der Vorwärwbehälter (1) einen öffnenden lösbare Abdichtungsmittel (11a, 11b) aufweisenden Boden (11) umfasst und auf einer Abstützung (A) angeordnet ist, wodurch dieser zwischen einer vom Ofen abstehenden Lage zum Vorwärmen des Schrotts (7) und einer über dem Ofen befindlichen Lage zum Ausladen des vorgewärmten Schrotts in denselben verfahrbar ist.

7. Anlage nach einem der vorangehenden Ansprüche, dadurch gekennzeichnet, dass der Vorwärmbehälter (1) aus einem Elektroofen besteht, der ein durch einen abnehmbaren Deckel (23) verschlossenes Gefäss (2) umfasst, dem einerseits Wärmezufuhrmittel (4) durch Verbrennung und anderseits elektrische Schmelzmittel (5) zugeordnet sind, damit dieser nacheinander für die Vorwärmung, dann für das Schmelzen einer Schrottladung (7) einsetzbar ist, wobei der Deckel (23) mindestens eine in einen Gasabzugsrohrstutzen (25) mündende Öffnung (24) aufweist, welcher abwechselnd an einen Hilfskreis (3) zur Aufbereitung der Vorwärmgase bzw. an den Hauptkreis (6) zur Reinigung der Schmelzabgase anschliessbar ist.

8. Anlage nach Anspruch 7, dadurch gekennzeichnet, dass die Schmelzmittel mindestens eine an eine Stromquelle angeschlossene Elektrode (5) umfassen, der Mittel zum Einführen und Rückzug dieser Elektrode (5) durch eine in dem Deckel (23) des Ofens (2) angeordnete Öffnung (26) zugeordnet sind, wobei letzterem lösbare Mittel (27) zum abdichtenden Verschluss nach dem Rückzug der Elektrode (5) zugeordnet sind.

9. Anlage nach Anspruch 8, dadurch gekennzeichnet, dass dem Ofen (2) mindestens eine abbrennbare den Deckel (23) durchquerende Elektrode (5) und mindestens eine feststehende am Boden (21) angeordnete Elektrode (50) zugeordnet ist, wobei diese Elektroden jeweils an zwei Pole einer Gleichstromquelle angeschlossen sind.

10. Anlage nach einem der Ansprüche 7 bis 9, dadurch gekennzeichnet, dass sie zwei identische zum Aufwärmen und zum Schmelzen einer Schrottladung (7) abwechselnd einsetzbare Öfen (1) (1') umfasst, und dass die beiden öfen (1) (1') abwechselnd und lösbar an den einen bzw. den anderen dieser Abzugskreise (3) (6) anschliessbar sind, wobei der zum Vorwärmen eingesetzte Behälter (1) an den Hilfskreis (3) zur Aufbereitung und der zum Schmelzen eingesetzte Behälter (1') an den Hauptkreis (6) zur Reinigung und umgekehrt angeschlossen wird.

11. Anlage nach Anspruch 10, dadurch gekennzeichnet, dass die Schmelzmittel für den jeweiligen Behälter (1) (1') mindestens eine abbrennbare senkrecht bewegliche in den Behälter (1) (1') einfahrbare Elektrode (5) (5') umfassen, und dass die den beiden Behältern (1) (1') jeweils zugeordneten Elektroden (5) (5') über mindestens einen Umschalter (53) an ein und dieselbe elektrische Stromquelle (52) anschliessbar sind, sodass an die Stromquelle (52) abwechselnd die dem zum Schmelzen eingesetzten Behälter (1') zugeordnete Elektrode (5') unter Abschaltung der dem zum Vorwärmen eingesetzten Behälter (1) zugeordnete Elektrode (5) und umgekehrt anschliessbar ist.

12. Anlage nach Anspruch 10, dadurch gekennzeichnet, dass sie für die beiden Öfen (1) (1') ein gemeinsames Schmelzmittel umfasst, das aus mindestens einer abbrennbaren Elektrode (56) besteht, die senkrecht auf einer Halterung (8) gleitbar montiert ist, welche zwischen zwei Stellungen zum Einfahren der abbrennbaren Elektrode (56) in denjenigen der beiden Öfen (1) (1'), der als Schmelzanlage eingesetzt ist, verfahrbar ist.

13. Anlage nach einem der Ansprüche 10 bis 12, wobei jeder Ofen (2) (2') mit einem Deckel (23) (23') verschlossen ist, der mindestens eine Öffnung (26) (26') zum Einfahren in den Ofen mindestens einer abbrennbaren senkrecht verfahrbaren Elektrode (5) (5') aufweist, dadurch gekennzeichnet, dass jede Öffnung (26) (26') mindestens ein abdichtendes Schliessmittel (27) (27') nach dem Rückzug der Elektrode umfasst, und dass jedem Behälter (1) (1') Mittel (4) (4') für die Zufuhr der für das Vorwärmen erforderliche Wärmemenge bei Erhaltung einer reduzierenden Atmosphäre in dem Ofen (2) (2') zugeordnet sind, wobei der Deckel (23) (23'), die Durgangsöffnung (26) (26') der Elektrode (5) (5') und alle anderen Lufteintrittsöffnungen während der Vorwärmung im wesentlichen dicht verschlossen sind.

14. Anlage nach einem der vorangehenden Ansprüche, dadurch gekennzeichnet, dass der Hilfsaufbereitungskreis (3) eine Kammer (31) mit einem Brenner (32) zur Verbrennung der Vorwärmgase umfasst.

15. Anlage nach einem der Ansprüche 7 bis 14, dadurch gekennzeichnet, dass die Seitenwand (22) des Ofens (2) eine ausreichende Höhe aufweist, damit, unter Berücksichtigung der Abmessungen der Wanne (21) und der unterschiedlichen Dichte zwischen dem Schrott und dem geschmolzenen Metall, die in den Ofen (2) eingefahrene vorzuwärmende Schrottladung (7) nach dem Schmelzvorgang eine für einen Abguss ausreichende Flüssigmetallmenge abgibt.

16. Anlage nach einem der Ansprüche 7 bis 15, dadurch gekennzeichnet, dass die für die Vorwärmung unabhängigen Wärmezufuhrmittel mindestens eine Lanze (72) zum Einspritzen eines die Verbrennung bewirkenden Medium bzw. eines kohlenstoffhaltigen Produktes in ein beim Metallabguss am Boden der Wann (21) Zurückgelassenes Badrest (71), wobei die neue vorzuwärmende Schrottladung (7) darüber eingesetzt wird.

17. Anlage nach einem der Ansprüche 10 bis 16, dadurch gekennzeichnet, dass die in dem Deckel (23) (23') des jeweiligen Ofens (2) (2') angeordnete Öffnung (24) (24') über einen Rohrstutzen (25) (25') an eine Abzweigung anschliessbar ist, die aus zwei mit lösbaren Absperrorgane versehenen Leitungszweige (30, 60) (30', 60'), je ein in den Hilfskreis (3) zur Aufbereitung der Vorwärmgase mündenden zweig (30) (30') und ein in den Hauptkreis (6) zur Reinigung der Schmelzabgase mündenden Zweig (60) (60'), besteht.

18. Anlage nach einem der Ansprüche 10 bis 16, dadurch gekennzeichnet, dass jeder Ofen (2) (2') an den Hauptkreis (6) zur Reinigung der Schmelzabgace über eine Abzugsleitung (60) (60') mit einem Lüfter (65) (65') angeschlossen ist, und mit einem Hilfskreis (3) (3') zur Aufbereitung der Vorwärmgase verbunden ist, der vor dem Lüfter (65) (65') an dieser Abzugsleitung (60) (60') abgezweigt ist, wobei die in dem Deckel (23) (23') von jedem Ofen (21) (2') angeordnete Abzugsfiffnung (24) (24') über einen Rohrstutzen (25) (25') an eine mit lösbaren Absperrorgane versehene Abzweigung angeschlossen ist, um die Abgase entweder in den Abzweigkreis (3) zur Aufbereitung der Vorwärmgase, - der entsprechende Lüfter (65) läuft mit einem reduzierten Durchsatz - oder direkt in den Hauptkreis (6) zur Reinigung einzuleiten, - der entsprechende Lüfter (65') läuft mit einem Nominaldurchsatz.

## Claims

1. Installation for the production of liquid metal by melting a charge of ferrous material, comprising at least one electric melting furnace (2) consisting of a tank (22) closed by a removable lid (23) and associated with electrical means (5) for melting a charge of ferrous material, at least one enclosure (1) for preheating the charge and a main circuit (6) for removing the hot gases and flue gases, equipped with pollutant removal means (61), the preheating enclosure (1) being associated with independent heat input means (4), characterized in that the gases produced inside said enclosure (1) are sent to an auxiliary circuit (3) for treatment at low throughput, equipped with specific pollutant removal means (31), and in that the flue gases produced inside the furnace (2) by the melting of the charge (7) are sent directly to the main treatment circuit (6).

2. Installation according to Claim 1, characterized in that the auxiliary low-throughput treatment circuit (3) comprises a chamber (31) for the incineration of the preheating gases equipped with a burner (32).

3. Installation according to Claim 1, characterized in that the independent heat input means (4) in the preheating enclosure (1) are provided to supply a heat input with maintenance of a reducing atmosphere inside the enclosure (1) and in that the latter is closed sufficiently tightly to prevent air inputs liable to modify the stoichiometric ratio.

4. Installation according to Claim 3, characterized in that the independent heat input means (4) in the preheating enclosure (1) comprise at least one burner (4) supplied with a sub-stoichiometric ratio of fuel to oxidizer.

5. Installation according to one of the preceding claims, characterized in that the preheating enclosure (1) is fixed and is equipped with at least one tightly sealed door for the introduction and withdrawal of at least one scrap handling basket.

6. Installation according to one of Claims 1 to 4, characterized in that the preheating enclosure (1) is equipped with an opening bottom (11) associated with removable sealing means (11a) (11b) and carried by a support (A) enabling it to travel between a position away from the furnace for preheating the scrap (7) and a position above the furnace for dumping the preheated scrap into the furnace.

7. Installation according to one of the preceding claims, characterized in that the preheating enclosure (1) consists of an electric furnace comprising a tank (2) closed by a removable lid (23), and associated, on the one hand, with means (4) of heat input by combustion and, on the other hand, with electric melting means (5), in order to serve successively for preheating and then for melting a charge of scrap (7), the lid (23) being provided with at least one opening (24) terminating in a manifold (25) for evacuation of the gases, which can be connected removably and alternately to an auxiliary preheating gas treatment circuit (3) or to the main melting flue gas purification circuit (6).

8. Installation according to Claim 7, characterized in that the melting means comprise at least one electrode (5) connected to a power source and associated with means of introduction and withdrawal of said electrode (5) through an opening (26) provided in the lid (23) of the furnace (2), said latter being associated with removable means (27) of tight closure after withdrawal of the electrode (5).

9. Installation according to Claim 8, characterized in that the furnace (2) is associated with at least one consumable electrode (5) which can penetrate through the lid (23) and with at least one fixed electrode (50) placed in the bottom (21), said electrodes being connected, respectively, to the two poles of a d.c. power source.

10. Installation according to one of Claims 7 to 9, characterized in that it comprises two identical furnaces (1) (1') which can serve alternately for the preheating of a charge of scrap (7) and for its melting, and in that the two furnaces (1) (1') can be connected alternately and removably to one or the other of said evacuation circuits (3) (6), the enclosure (1) serving for preheating being connected to the auxiliary treatment circuit (3), and the enclosure (1') serving for melting being connected to the main purification circuit (6) and vice versa.

11. Installation according to Claim 10, characterized in that the melting means comprise, for each enclosure (1) (1'), at least one consumable electrode (5) (5') vertically movable in order to penetrate the enclosure (1) (1') and in that the electrodes (5) (5') associated respectively with the two furnaces (1) (1') can be connected to the same electric power source (52) by at least one change-over switch (53) making it possible to connect alternately to the power source (52) the electrode (5') associated with the enclosure (1') which serves for melting, by deconnecting the electrode (5) associated with the enclosure (1) serving for preheating, and vice versa.

12. Installation according to Claim 10, characterized in that it comprises a common melting means for the two furnaces (2) (2') comprising at least one consumable electrode (56) mounted sliding vertically on a support (8) which can travel between two positions, respectively, of introduction of the consumable electrode (56) into the one of the two furnaces (2) (2') which serves for melting.

13. Installation according to one of Claims 10 to 12, characterized in that each furnace (2) (2') being closed by a lid (23) (23') provided with at least one opening (26) (26') for the introduction into the enclosure of at least one vertically movable consumable electrode (5) (5'), each opening (26) (26') is provided with a means (27) (27') of tight closure after withdrawal of the electrode (5) (5'), and in that each enclosure (1) (1') is associated with means (4) (4') capable of providing the quantity of heat necessary for preheating while maintaining a reducing atmosphere in the furnace (2) (2'), the lid (23) (23'), the opening (26) (26') for the passage of the electrode (5) (5') and all the other air inlet openings being closed in an approximately airtight manner during preheating.

14. Installation according to one of the preceding claims, characterized in that the auxiliary treatment circuit (3) comprises a chamber (31) for incineration of the preheating gases, equipped with a burner (32).

15. Installation according to one of Claims 7 to 14, characterized in that the lateral wall (22) of the furnace (2) has a sufficient height so that, in accordance with the dimensions of the bowl (21) and the differences in density between the scrap and the molten metal, the scrap charge (7) to be preheated introduced into the furnace (2) supplies, after melting a quantity of molten metal that is sufficient for one casting operation.

16. Installation according to one of Claims 7 to 15, characterized in that the independent preheating heat input means comprise at least one injection nozzle (72) of an oxidizer and/or of a carbonaceous product in a bottom bath (71) left in the bottom of the bowl (21) on the casting of the metal, and above which the new charge (7) of scrap to be preheated is placed.

17. Installation according to one of Claims 10 to 16, characterized in that the opening (24) (24') provided in the lid (23) (23') of each furnace (2) (2') can be connected by a manifold (25) (25') to a fork comprising two branches (30, 60) (30', 60') provided with removable closure means, respectively one branch (30)(30') for evacuation to the auxiliary preheating gas treatment circuit (3) and one branch (60') (60') for evacuation to the main melting flue gas purification circuit (6).

18. Installation according to one of Claims 10 to 16, characterized in that each furnace (2) (2') is connected to the main melting flue gas purification circuit (6) by an exhaust duct (60)(60') equipped with a blower (65)(65') and associated with an auxiliary preheating gas treatment circuit (3)(3') connected by a branch line to said exhaust duct (60)(60') upstream from the blower (65) (65'), the opening (24)(24') made in the lid (23)(23') of each furnace (2)(2') being connected by a manifold (25)(25') to a fork provided with removable closure means making it possible to send the gas either to the branch preheating gas treatment circuit (3), the corresponding blower (65) being set at low rate, or directly to the main purification circuit (6), the corresponding blower (65') being set at its nominal rate.
